# EUROPEAN PATENT SPECIFICATION

(11) **EP 3 718 037 B1**
(45) Date of publication and mention of the grant of the patent: **08.01.2025**
(21) Application number: 18884007.8
(22) Date of filing: 29.11.2018
(51) Int. Cl.: G06F 21/44, B67D 1/08

(54) **APPARATUS, SYSTEM, AND METHOD OF PROVIDING A PRINTED AUTHENTICATION AND CERTIFICATION FUNCTIONAL CIRCUIT**
VORRICHTUNG, SYSTEM UND VERFAHREN ZUR BEREITSTELLUNG EINER GEDRUCKTEN AUTHENTIFIZIERUNGS- UND ZERTIFIZIERUNGSFUNKTIONSSCHALTUNG
APPAREIL, SYSTÈME ET PROCÉDÉ DE FOURNITURE D'UN CIRCUIT FONCTIONNEL D'AUTHENTIFICATION ET DE CERTIFICATION IMPRIMÉ

(30) Priority: 30.11.2017 US 201762592955 P
(43) Date of publication of application: 07.10.2020
(73) Proprietor: Jabil Inc., St. Petersburg, Florida 33716 (US)
(72) Inventor: THEEUWES, Marc, St. Petersburg Florida 33716 (US)
(74) Representative: Gulde & Partner
(86) International application number: PCT/US2018/063023
(87) International publication number: WO 2019/108768

(56) References cited:
- WO-A1-2014/096405
- WO-A2-2005/092012
- KR-A- 20120 050 987
- US-A1- 2013 206 011
- US-A1- 2013 285 681
- US-A1- 2013 334 214
- US-A1- 2013 344 206
- US-A1- 2017 228 519

## Description

### BACKGROUND

### Field of the Disclosure

The disclosure relates generally to presence sensing and authentication, and, more particularly, to an apparatus, system, and method of providing a printed authentication and certification functional circuit.

### Background of the Disclosure

There presently exists a need in the art to identify pairs of functional devices or system elements for use with one another. Such identification may be a simple authentication, or may include higher level functionality based on identification and characteristics, such as a modified operation of a first device based on the identity and/or characteristics of a second device or element, and/or automated replenishment based on element characteristics.

By way of non-limiting example, presently-marketed coffee machines may receive coffee pods, diagnostic devices may receive diagnostic cassettes, water coolers may receive jugs filled with water or other beverages, and so on, and in each such instance, there may be a preference or need to identify, or identify the characteristics of, the one device or element in light of its prospective use with the other. For example, and in a variety of smart-packaging contexts such as those mentioned above, there may be a need to identify not only the presence of a coffee pod in a coffee machine, but further to identify what type of coffee pod has been placed into the machine. This pod type recognition may allow for modifications to brewing methods executed by the machine in accordance with precisely which pod is placed into the brewing machine, such as variable brewing for a dark roast, a French vanilla, tea, or hot chocolate.

Similarly, there may be a desire in a smart packaging context to provide a label on smart packaging, such as on the aforementioned water jug, such that, when the label is associated with a device, such as a dispenser that dispenses the water from the jug, the characteristics of the packaged element (such as the water jug) may be read by the device in order to execute particular functionality. For example, the level of fullness of the jug may need to be sensed while the jug resides in the dispenser, such as to allow for an indication of the need to replenish the water jug based on a predetermined level of emptiness.

The presently-provided solutions to the aforementioned problems in the known art are both expensive and inadequate. For example, present identification or authentication technologies typically include the use of so-called "RFID" (Radio Frequency IDentification) technology associated with one of the elements, and an RFID reader associated with the other device/element. By way of non-limiting example, a coffee pod may have associated therewith a RFID label which, when read by the RFID reader of the brewing machine, indicates the desired brewing method for that particular coffee pod.

RFID technologies are typically expensive, such as in the range of $0.50 per label or more, and require significant integration technologies, such as printed electronics, adhesives, active electronics, or the like, for the RFID label, all of which may further add to the expense of the use of RFID technologies. Moreover, RFID techniques necessitate the inclusion of an expensive active RFID reader in the system. Further, RFID and other known technologies are typically inadequate at least in that the simple identification available through the use of RFID, absent the use of significant active electronics circuits, does not afford the ability to assess characteristics of the packaging associated with the RFID smart label beyond its identification, such as the fullness or temperature of a water jug.

Yet further, present identification and authentication technologies, such as the aforementioned RFID, may add significantly to the size, profile, and weight of the system element with which the RFID label is associated. Accordingly, these variations in physical characteristics of, for example, a coffee pod, must be accounted for by the manufacturer of the device that will mate with the device having the smart label. For example, not only must a brewing machine be designed so as to accommodate the inclusion of a RFID reader, a greater mechanical height, greater mechanical weight support, and the like must be provided in a coffee machine to accommodate the bulkier smart labels typically associated with RFID coffee pods.

Conventional systems of identifying and authenticating the characteristics of smart packaged elements are disclosed in WO 2014/096405 A1.

Therefore, the need exists for an apparatus, system and method of identifying and authenticating the characteristics of smart packaged elements.

### SUMMARY

The present invention is directed to subject matter as defined in the appended set of claims.

The disclosure includes at least an apparatus, system and method for authenticating a physical element suitable for electromechanical association with a receiving device. The apparatus, system and method may include at least a printable substrate associated with the physical element; a first circuit printed on the printable substrate and suitable to receive at least one electrical characteristic of the physical element; an incomplete circuit associated with the receiving device, wherein an interface of the first circuit to the receiving device completes the incomplete circuit to form a functional circuit; at least one sensor within the incomplete circuit and suitable for sensing the at least one electrical characteristic via the functional circuit upon completion of the incomplete circuit; and at least one comparative listing stored within a non-transitory memory of the receiving device, wherein the at least on sensed electrical characteristic is compared to the at least one comparative listing to provide the authentication, and wherein the authentication provided is indicative of a unique action.

Thus, the disclosure provides at least an apparatus, system and method of identifying and authenticating the characteristics of smart packaged elements.

### BRIEF DESCRIPTION OF THE DRAWINGS

The disclosure is illustrated by way of example and not limitation in the accompanying drawings, in which like references indicate similar elements, and in which:
FIG. 1 illustrates an embodiment of a functional response circuit having at least two aspects, namely a smart element aspect and a receiving device aspect;
FIG. 2 illustrates an exemplary embodiment in which the smart package portion of a functional circuit is printed on a substrate which may form part of smart packaging;
FIG. 3 illustrates an exemplary interface between the portion of the functional circuit associated with the smart packaged element;
FIG. 4 illustrates an exemplary functional circuit portion associated with a substrate that may be placed upon a smart package;
FIG. 5 illustrates a variety of functional circuit configurations;
FIG. 6 illustrates the affixation of a smart label to the top of a disposable coffee pod;
FIG. 7 illustrates a plurality of functional circuits printed on each of a number of liquid dispensing canisters; and
FIGs. 8A and 8B illustrate a medical analytical host device suitable for accepting ones of a plurality of diagnostic cartridges, and a flow diagram illustrating an operation of the hand-held medical device of Figure 8A.

### DETAILED DESCRIPTION

The figures and descriptions provided herein may have been simplified to illustrate aspects that are relevant for a clear understanding of the herein described devices, systems, and methods, while eliminating, for the purpose of clarity, other aspects that may be found in typical similar devices, systems, and methods. Those of ordinary skill may recognize that other elements and/or operations may be desirable and/or necessary to implement the devices, systems, and methods described herein. But because such elements and operations are well known in the art, and because they do not facilitate a better understanding of the present disclosure, a discussion of such elements and operations may not be provided herein. However, the present disclosure is deemed to inherently include all such elements, variations, and modifications to the described aspects that would be known to those of ordinary skill in the art.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc., may be used herein to describe various elements, components, regions, layers and/or sections, these elements, components, regions, layers and/or sections should not be limited by these terms. These terms may be only used to distinguish one element, component, region, layer or section from another element, component, region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the exemplary embodiments.

Processor-implemented modules, systems and methods of use are disclosed herein that may provide communicative and/or networked access to a plurality of types of digital content, including but not limited to video, image, text, audio, metadata, algorithms, interactive and document content, and so on, which may track, deliver, manipulate, compute, transform and/or report the accessed content. Described embodiments of these modules, systems and methods are intended to be exemplary and not limiting. As such, it is contemplated that the herein described systems and methods may be adapted and may be extended to provide enhancements and/or additions to the exemplary modules, systems and methods described. The disclosure is thus intended to include all such extensions.

Furthermore, it will be understood that the term "module" as used herein does not limit the functionality to particular physical modules, but may include any number of tangibly-embodied software and/or hardware components having a transformative effect on at least a portion of a system. In general, a computer program product in accordance with one embodiment comprises a tangible computer usable medium (e.g., standard RAM, an optical disc, a USB drive, or the like) having computer-readable program code embodied therein, wherein the computer-readable program code is adapted to be executed by a processor (which may work in connection with an operating system) to implement one or more functions and methods as described below. In this regard, the program code may be implemented in any desired language, and may be implemented as machine code, assembly code, byte code, interpretable source code or the like (e.g., via C, C++, C#, Java, Actionscript, Objective-C, Javascript, CSS, XML, etc.).

Embodiments may include an apparatus, system, and method of confirming and authenticating the presence, identity and/or characteristics of physical elements designed for electrical, mechanical and/or electromechanical association with other devices or elements, such as through the use of completion or closure of functional circuits. The embodiments may include a first physical element, such as a beverage pod, that is distinct from the one or more second physical elements or devices, such as a beverage machine designed to receive such beverage pods for the purpose of automatically brewing a beverage dependent upon the presence or type of beverage pod.

The first and/or second physical element may include one or more printed circuit boards, firmware, network communication capabilities, user interfaces and indicators, connective power, or additional elements as would be apparent to the skilled artisan, some aspects of which are discussed herein. The first physical element may be or be associated with one or more consumables or similar packages, such as may be formed of plastic or glass, and which may have associated there with one or more smart label aspects, such as active or passive electronically responsive labels, or containers or package covers having active or passive electronically responsive aspects.

More particularly, embodiments may accordingly provide a cost-effective solution for authentication and identification of, and/or characteristics of, smart-packaged elements associated with "paired systems", i.e., those electrical, mechanical, or electromechanical systems having multiple components mated together to impart operation after manufacture. The embodiments may employ printed electronics, functional inks, and printed circuit design and processing to allow for the disclosed smart packaging and labels, in conjunction with the other aspect(s) of the paired system, to form functional response circuits which, when associated with one or more in-circuit sensor modules within the receiving device, allow the receiving device to detect and/or assess the characteristics of the smart-packaged elements such that the functionality of the receiving device may be varied in accordance with the detection and/or the identified characteristics.

The disclosed printed circuit smart package labels of the embodiments are low-cost, low weight, and low-profile, and may be fully passive in that they may be activated by physical, proximity, and/or electrical association with the paired aspect of the functional circuit within a receiving device. That is, the disclosed smart label functional circuit portion may be activated only in combination with the sensor system portion of the functional circuit on-board the receiving device. The sensor system portion of the functional circuit, and particularly the sensing module/unit of the receiving device, may then allow for authentication and identification of characteristics of the received element (also referred to herein as the device or the element "under test").

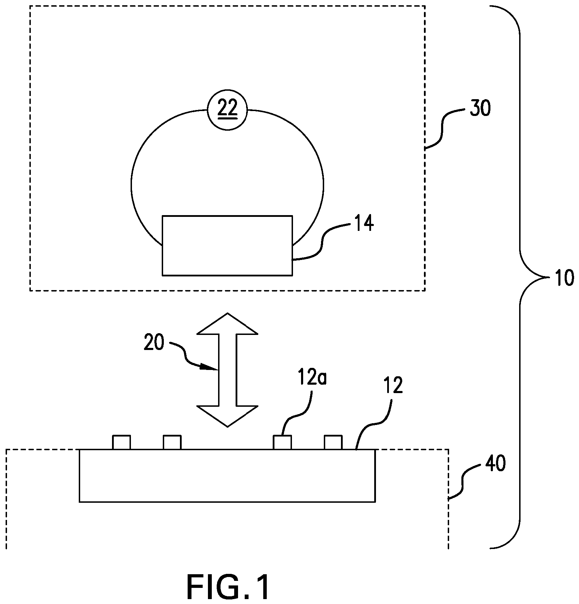

Yet more specifically, and as illustrated in Figure 1, embodiments may include a functional response circuit 10 having at least two aspects, namely a smart element aspect 12 and a receiving device aspect 14, and in which at least the smart element aspect may be constructed of functional inks 12a. The functional inks 12a may provide conductive, inductive, capacitive, and/or resistive circuits and behavior, by way of non-limiting example. The functional inks 12a may be printed using any known methodologies, including, but not limited to, screen printing.

The printed smart element aspect 12 of the functional response circuit 10 may communicate via an interface 20, such as via electromechanical or electrical contact, or wirelessly, to a sensor 22 that may be included in a sensor module circuit 14 aspect of the functional circuit 10 within the receiving device 30. The functional circuit 10 may provide a specific function once the smart package circuit portion 12 is associated with the sensor module circuit portion 14, and this specific function may be sensed by the sensor device/module 22 included in the sensor module circuit portion 14 of the functional circuit 10. That is, the smart element circuit 12 may complete or close the receiving device circuit portion 14 to form the functional response circuit 10.

The functions provided by the completed functional circuit 10 may include, but are not limited to, identification of a device under test, authentication of a device under test, or assessment of the characteristics of the device under test (also collectively referred to herein as "authentication"). This identification, authentication, or assessment may include receipt of the characteristics of the device under test 40 by the sensor device 22, which may in turn cause the sensor device 22 to modify an action of the receiving device 30, and/or cause the receiving device 30 to relay the received data elsewhere. By way of non-limiting example, the specific functions sensed by the completed functional circuit 10 may be application-specific, such as identification of a type of coffee pod, a type of diagnostic cassette, or the like, or may be application non-specific, such as sensing of a temperature, a liquid or gas level, a humidity, vibration, or the like.

As mentioned above, various electrical behaviors may be provided by the functional inks 12a that form at least the smart package portion 12 of the functional response circuit 10. Such behaviors may be as a resistive circuit, a resistive/capacitive circuit (RC), or a resistive/inductive/capacitive circuit (RLC), by way of non-limiting example. More particularly, the printed aspect of the functional response circuit 10 may provide any electrical function that may be detected by the sensor device 22 once associated with the sensor module circuit portion 14, and such electrical functions may be, but are not limited to, resistance ladder, capacitive ladder, frequency-filtering, frequency-passing, oscillation, or frequency emission, by way of non-limiting example.

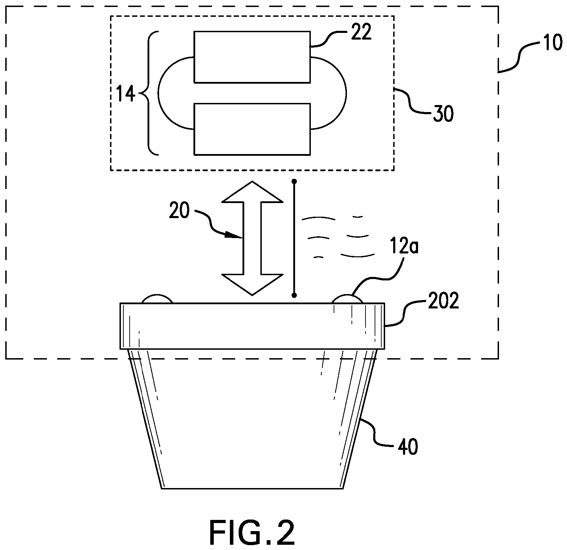

Figure 2 illustrates an exemplary embodiment in which the smart package portion 12 of a functional circuit 10 is printed on a substrate 202 which may form part of smart packaging 40. Also illustrated in Figure 2 are the receiving/host device 30 that receives the device under test 40, which includes a sensor 22 within a sensor module circuit portion 14 of the functional circuit 10, wherein the functional circuit 10 is completed and thus "activated" once the smart package portion 12 and the sensor module circuit portion 14 are "mated".

In the illustration, the receiving/host device 30, which includes the sensor 22, interrogates the smart package portion 12 of the functional circuit 10 (which is printed on the substrate) once the functional circuit 10 is completed via at least one of an electromechanical contact, a wired electrical contact, or wireless interface 20. Once the smart package portion 12 of the functional circuit 10 is interfaced to the sensor module circuit 14, the functional circuit 10 is complete and the sensor 22 may interrogate the smart package 40 for the purposes of: authentication, such as wherein an assessment is made whether the functional circuit is as completed as expected; type assessment, wherein the type of functional circuit is assessed, such as wherein various levels of resistance may correspond to various flavors, for example; orientation, wherein the functional circuit value indicates an orientation of the smart packaged element, such as wherein an assessment is made as to whether the smart packaged element is inserted upside down, backwards, or as expected, by way of non-limiting example; age, wherein the functional circuit value corresponds to a production date of the smart packaging; and/or package or content characteristics, such as wherein the completed functional circuit provides electronic characteristics of the smart package that change as the characteristics of the contents of the smart packaging change.

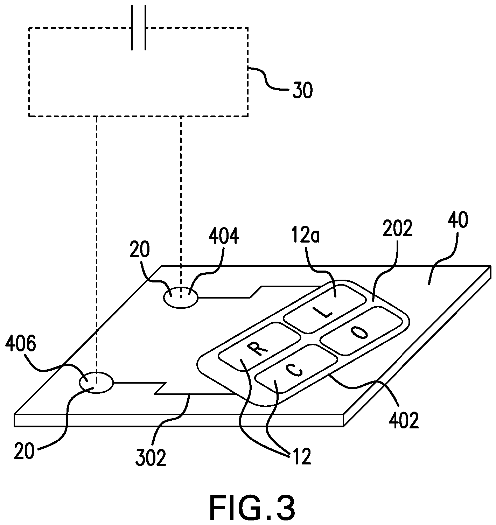

Figure 3 illustrates an exemplary interface 20 between the portion of the functional circuit 10 associated with the smart packaged element 40, such as the portion of the functional circuit printed on the package 40 or on a substrate 202 associated with the package 40, and the sensor module circuit portion 14 of the functional circuit 10. As shown, the sensor module circuit 14 may interact with the smart package circuit 12 via contact or noncontact methodologies known to those skilled in the art. By way of example, contact interface 20 may include metal spring contacts, "bump" contacts 20, and/or leads/lead wires 302, by way of non-limiting example. Wireless interfaces may include, by way of non-limiting example, wireless conductivity at any wireless frequency, such as including optical interfaces.

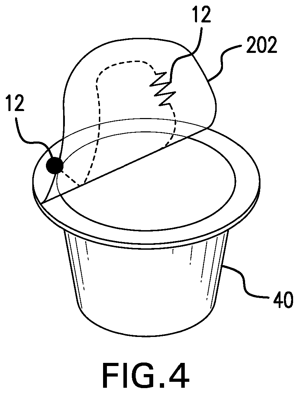

Figure 4 illustrates an exemplary smart element circuit portion 12 associated with a substrate 202 that may be placed upon a smart package 40. Of note, in certain circumstances the printed smart element circuit 12 may be printed directly upon the smart package 40. The exemplary substrate 202 provided for receiving the printed circuit portion 12 may be a substrate of any type or makeup presently known in the art such as may be associated with product packaging, labels, clothing, food or food containers, disposable coffee pods, diagnostic cassettes, and the like. The substrate 202 may be conformable, and/or may be formed of paper, thin film, metallic, plastic, PVC, PET, Polyimide, or the like.

With reference now particularly to Figures 3 and 4, the substrate 202 provided may be adhered by an adherent 402 to the smart package 40, such as by an adhesive, epoxy, or curing. The substrate 202 shown may thus be an adhesive-backed substrate, and, as shown, may have atop thereof an interface 20 for communicatively associating with the sensor module circuit portion 14, such as when placed into a receiving device 40. In an embodiment, the interface 20 may include two conductive contact pads 404, 406 for interfacing with the sensor module circuit portion 14. Printed in electrical association with these conductive contact pads 404, 406 may be, for example, lead wires in communication with the remainder of the printed circuit portion, such that, when physically associated with the receiving device 30, the functional circuit 10, from the smart packaged element circuit portion 12, through the lead wires 302, through the contact pads 404, 406, and via the sensor module circuit portion 14 in the receiving device 30, is electrically completed.

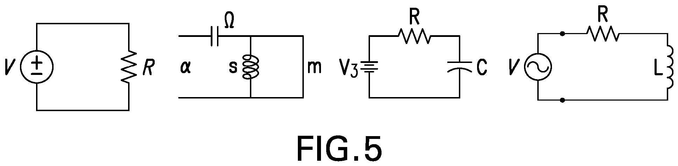

The functional circuit 10 may contain a variety of elements, such as resistive elements, capacitive elements, inductive elements, and optical/light emitting elements, by way of non-limiting example. These elements may be exclusively or partially present in the smart packaged element circuit 12, and when associated through the lead wires 302 and contact pads 404, 406 with the sensing module circuit portion 14 of the functional circuit 10 (which may provide an activation voltage and current), the functional circuit 10 may be configured in any known manner that provides for sensing by the sensing device 22 of the receiving device 30, such as but not limited to the configurations illustrated in Figure 5.

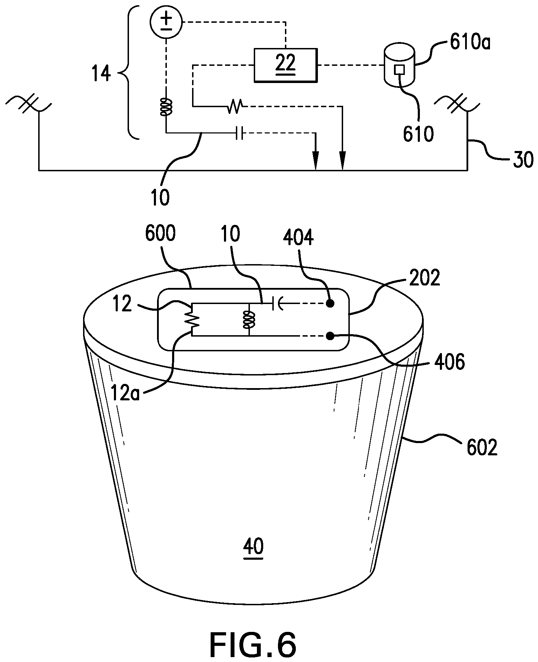

In embodiments, the smart label of Figures 3 and 4 may be affixed to the top of a smart package such as a disposable coffee pod 602, such as is illustrated in Figure 6. As such, once the coffee pod is placed into a beverage machine, the sensor module circuit portion 14 within the machine 30 may make electrical contact with the conductive contact pads 404, 406 of Figure 4, and may, therethrough, provide an electrical current that causes a behavior by the functional circuit portion 10 on the smart label 600. The sensor module circuit portion 14 of the functional circuit 10 may include a sensor 22 as discussed herein, and that sensor 22 may assess the feedback provided from the smart packaged element circuit portion 12 via a completed functional circuit 10.

Once the behavior of the functional circuit 10 is assessed, the receiving machine 30 may have, either stored at the machine or stored, for example, in the cloud, one or more listings 610 of characteristics or behaviors of the functional circuit 12 and the actions indicated thereby. By way of non-limiting example, and with respect to Figure 6, the receiving device 30 may have stored in association therewith, such as in an on-board memory 61 0a, a listing 610, such as in a relational database, of different coffee flavors and the correspondent brew times for each type of pod. Thus, the pod 602 of Figure 6 may be received at the receiving device 30, and the response/feedback of the functional circuit 10 once placed within the receiving device 30 may provide an identification of the type of coffee pod placed into the machine. This identification may, in turn, indicate to the coffee machine, based on the listing, the brew time and temperature for that particular pod.

Of course, the embodiments are not limited to the foregoing exemplary embodiment, as the sensor may sense 22 any of myriad characteristics of the functional circuit 10 once the smart package 40 is placed into the receiving device 30, and these characteristics may lead to any type of conclusion by the receiving machine 30 based on comparison of the characteristics senses to the listing 610. For example, the characteristics sensed may dictate a conclusion from the listing 610 that a product expiration has been reached, that a new product must be ordered, that an improper level or orientation has occurred, that a product is an ineligible knock-off, and so on.

Further, the listing 610 may, as referenced above, be stored on-board the receiving device 30. Alternatively, the listing 610 may be stored off-board, such as in the cloud to which the receiving device is wireless connected. In the case of an off-board listing, the receiving device 30 may receive and/or request batched updates to the listing periodically, or may "call out" for a listing comparison upon each new reception of a smart packaged element 40.

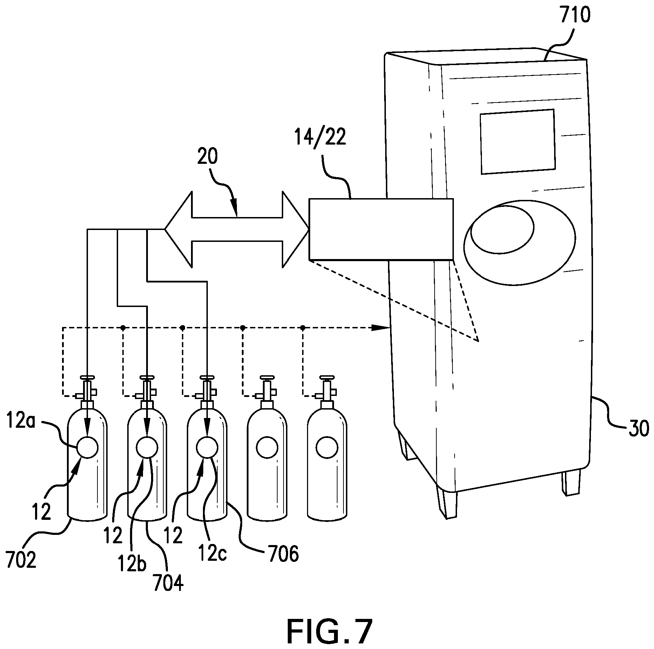

Figure 7 provides an additional example of the use of the illustrated embodiments. In the example of Figure 7, a plurality of smart element circuits 12a, 12b, 12c... is printed on each of a number of liquid dispensing canisters 702, 704, 706... These liquid dispensing canisters 702, 704, 706 are placed in physical association with a soft drink dispensing machine 710.

The soft drink dispensing machine 710 includes therein a sensor 22 and a sensor module circuit 14 which, when interfaced to the smart packaged element circuit 12a, 12b, 12c on one of the canisters 702, 704, 706, completes the functional circuit 10 and allows for an assessment by the sensor 22 of the behavior of the functional circuit 10 in association with each canister 702, 704, 706. Accordingly, the soft drink machine 710 may interrogate the beverage concentrate container 702, 704, 706 to assess the flavor of liquid associated with that concentrate container (based on a comparison of the sensor outcome to the aforementioned listing). By way of non-limiting example, flavors may include cola, diet cola, decaffeinated cola, fruit flavor additive, and so on. Thereby, in the example of Figure 7, human error in misplacing (so that the wrong soft drinks are provided by the soda machine) the concentrate containers is no longer of concern, as the host soft drink machine may interrogate (upon or without an interrogation request) one or more concentrate containers before dispensing any beverage to insure that the liquid being dispensed as coming from the correct concentrate container 702, 704, 706.

Further assessments may be made by the sensor module 22 in the illustration of Figure 7, as indicated herein above in accordance with the embodiments. By way of non-limiting example, the functional circuit 12 on the substrate associated with each concentrate container 702, 704, 706 may provide characteristics that reflect, for example, the level of liquid within the concentrate container. Thereby, the host device, such as soda machine 710, may gain information as to when new concentrate containers should be ordered, such as when the level of concentrate container in a given container falls below 15% of container volume. This reorder information may be present in the listing, and the 15% threshold may be indicated based on the capacitance of the smart packaged element circuit, by way of example.

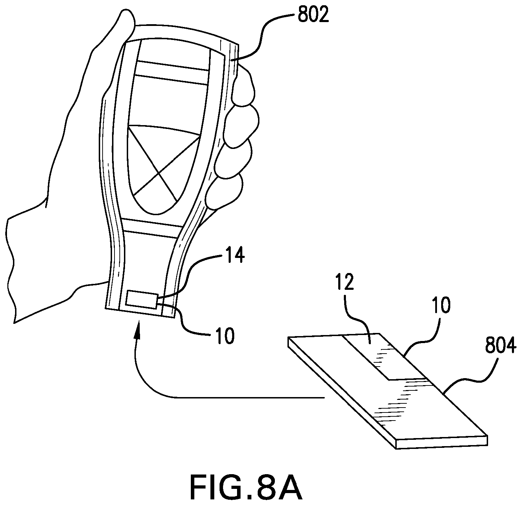

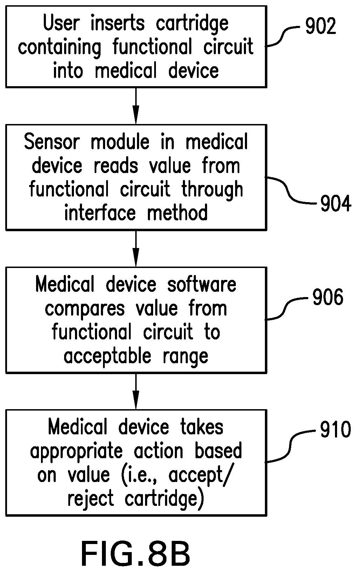

Figures 8A and 8B illustrate additional embodiments of the disclosure. More particularly, Figure 8A illustrates a medical analytical host device 802 suitable for accepting ones of a plurality of diagnostic cartridges 804, each capable of completing a functional circuit 10. As shown and by way of non-limiting example, the value returned from the functional circuit 10 to the sensor may correspond, for example, to a particular date and time, which may be indicative of the acceptability of the inserted diagnostic cartridge 804.

Figure 8B is a flow diagram illustrating an operation of the hand-held medical device 802 of Figure 8A. Of note, the flow of Figure 8B is provided by way of example, and it will be appreciated in light of the flow of Figure 8B the manner of flow of other similar embodiments. In the flow diagram at step 902, the user may insert a cartridge containing a smart packaged element circuit portion into the medical device. At step 904, the sensor module circuit portion in the medical device may complete a functional circuit once electrically connected to the smart packaged circuit portion, and may then read a value from the functional circuit.

At step 906, the medical device may make a comparison of the value from the functional circuit to a stored listing that includes at least an acceptable range of characteristics for the diagnostic cartridge inserted. And at step 910, the medical device may take an appropriate action based on the comparison of the value provided from the functional circuit to the stored listing. Such appropriate actions may include, by way of non-limiting example, accepting or rejecting the inserted cartridge.

Further included in the embodiments may be firmware and software interfaces to provide the functionality discussed throughout. For example, firmware in the functional circuit may sense the liquid level, and may use this information to indicate dosing or auto replenishment. And the auto replenishment threshold may be information provided remotely from cloud-based software algorithms. Additionally, the disclosed communication capabilities may include communication software for communication with one or more smartphone apps or similar computing applications. Further, a cloud-based software backend may store and serve received data to and from the app or application. Some or all of the processing discussed throughout may be performed at the cloud based backend, such as alerts or email confirmations for auto replenishment. Communication methodologies may include BLE, Bluetooth, WiFi, cellular, and the like.

In the foregoing Detailed Description, it can be seen that various features are grouped together in a single embodiment for the purpose of streamlining the disclosure. This method of disclosure is not to be interpreted as reflecting an intention that the embodiments require more features than are expressly recited herein. That is, the recited embodiments are provided by way of example only, and the disclosure encompasses any embodiments having more or fewer elements than the exemplary embodiments which will be apparent to the skilled artisan in light of the discussion herein.

## Claims

1. A system for authenticating a physical element (40) suitable for electromechanical association with a receiving device (30), comprising:
a printable substrate (202) associated with the physical element (40);
a first circuit (12) printed on the printable substrate (202) and suitable to receive at least one electrical characteristic of the physical element (40);
an incomplete circuit (14) associated with the receiving device (30), wherein an interface (20) of the first circuit to the receiving device (30) completes the incomplete circuit to form a functional circuit (10);
at least one sensor (22) within the incomplete circuit (14) and suitable for sensing the at least one electrical characteristic via the functional circuit (10) upon completion of the incomplete circuit (14); and
at least one comparative listing (610) stored within a non-transitory memory (61 0a) of the receiving device (30), wherein the at least on sensed electrical characteristic is compared to the at least one comparative listing (610) to provide the authentication, and wherein the authentication provided is indicative of a unique action.

2. The system of claim 1, wherein the interface (20) comprises a wired interface or a wireless interface.

3. The system of claim 1, wherein the incomplete circuit (14) comprises an open circuit.

4. The system of claim 1, wherein the first circuit (12) comprises a passive circuit.

5. The system of claim 1, wherein the comparative listing (610) comprises a database.

6. The system of claim 1, wherein the first circuit (12) comprises a plurality of functional inks (12a).

7. The system of claim 1, wherein the first circuit (12) comprises a screen print.

8. The system of claim 1, wherein the physical element (40) consists of one of a coffee pod (602), a diagnostic cassette (804), a beverage jug, and a liquid canister (702, 704, 706).

9. The system of claim 1, wherein the receiving device (30) comprises one of a brewing machine and a diagnotics reader (802).

10. The system of claim 1, wherein the authentication comprises at least one of presence, identification, temperature, level, humidity, and vibration.

11. The system of claim 1, wherein the sensed electrical characteristic comprises at least one of resistance, capacitance, inductance, light performance, filtered frequency, passed frequency, and emitted frequency.

12. The system of claim 1, wherein the print substrate (202) is conformable, and / or
wherein the print substrate (202) comprises an outer surface of the physical element (40).

13. The system of claim 1, further comprising an adherent (402) suitable to adhere the print substrate (202) to the physical element (40).

14. The system of claim 1, further comprising supplied power at the receiving device (30), wherein the supplied power is supplied to the functional circuit (10) upon completion of the functional circuit (10).

15. The system of claim 1, wherein the unique action comprises creating a particular beverage or a re-order.

## Patentansprüche

1. System zur Authentifizierung eines physischen Elements (40), das für eine elektromechanische Verbindung mit einer Empfangsvorrichtung (30) geeignet ist, umfassend:
ein bedruckbares Substrat (202), das mit dem physischen Element (40) verbunden ist;
eine erste Schaltung (12), die auf das bedruckbare Substrat (202) gedruckt ist und geeignet ist, wenigstens eine elektrische Eigenschaft des physischen Elements (40) zu empfangen;
eine unvollständige Schaltung (14), die mit der Empfangsvorrichtung (30) verbunden ist, wobei eine Schnittstelle (20) der ersten Schaltung zu der Empfangsvorrichtung (30) die unvollständige Schaltung vervollständigt, um eine Funktionsschaltung (10) auszubilden;
wenigstens einen Sensor (22) innerhalb der unvollständigen Schaltung (14), der geeignet ist, die wenigstens eine elektrische Eigenschaft über die Funktionsschaltung (10) nach Vervollständigung der unvollständigen Schaltung (14) zu erfassen; und
wenigstens eine vergleichende Auflistung (610), die in einem nichtflüchtigen Speicher (610a) der Empfangsvorrichtung (30) gespeichert ist, wobei die wenigstens eine erfasste elektrische Eigenschaft mit der wenigstens einen vergleichenden Auflistung (610) verglichen wird, um die Authentifizierung bereitzustellen, und wobei die bereitgestellte Authentifizierung auf eine eindeutige Aktion hinweist.

2. System nach Anspruch 1, wobei die Schnittstelle (20) eine drahtgebundene Schnittstelle oder eine drahtlose Schnittstelle umfasst.

3. System nach Anspruch 1, wobei die unvollständige Schaltung (14) eine offene Schaltung umfasst.

4. System nach Anspruch 1, wobei die erste Schaltung (12) eine passive Schaltung umfasst.

5. System nach Anspruch 1, wobei die vergleichende Auflistung (610) eine Datenbank umfasst.

6. System nach Anspruch 1, wobei die erste Schaltung (12) eine Mehrzahl von Funktionstinten (12a) umfasst.

7. System nach Anspruch 1, wobei die erste Schaltung (12) einen Siebdruck umfasst.

8. System nach Anspruch 1, wobei das physikalische Element (40) aus einem aus einer Kaffeekapsel (602), einer Diagnosekassette (804), einer Getränkekanne und einem Flüssigkeitsbehälter (702, 704, 706) besteht.

9. System nach Anspruch 1, wobei die Empfangsvorrichtung (30) eines aus einer Brühmaschine und einem Diagnoselesegerät (802) umfasst.

10. System nach Anspruch 1, wobei die Authentifizierung wenigstens eines aus Anwesenheit, Identifikation, Temperatur, Füllstand, Feuchtigkeit und Vibration umfasst.

11. System nach Anspruch 1, wobei die erfasste elektrische Eigenschaft wenigstens eines aus Widerstand, Kapazität, Induktivität, Lichtleistung, gefilterter Frequenz, durchgelassener Frequenz und emittierter Frequenz umfasst.

12. System nach Anspruch 1, wobei das Drucksubstrat (202) anpassungsfähig ist, und/oder wobei das Drucksubstrat (202) eine Außenfläche des physikalischen Elements (40) umfasst.

13. System nach Anspruch 1, das ferner ein Klebemittel (402) umfasst, das geeignet ist, das Drucksubstrat (202) an das physische Element (40) zu kleben.

14. System nach Anspruch 1, das ferner eine zugeführte Leistung an der Empfangsvorrichtung (30) umfasst, wobei die zugeführte Leistung der Funktionsschaltung (10) nach Fertigstellung der Funktionsschaltung (10) zugeführt wird.

15. System nach Anspruch 1, wobei die eindeutige Aktion das Erzeugen eines bestimmten Getränks oder einer Nachbestellung umfasst.

## Revendications

1. Système d'authentification d'un élément physique (40) approprié pour une association électromécanique avec un dispositif de réception (30), comprenant :
un substrat imprimable (202) associé à l'élément physique (40) ;
un premier circuit (12) imprimé sur le substrat imprimable (202) et approprié pour recevoir au moins une caractéristique électrique de l'élément physique (40) ;
un circuit incomplet (14) associé au dispositif de réception (30), une interface (20) du premier circuit to the dispositif de réception (30) complétant le circuit incomplet pour former un circuit fonctionnel (10) ;
au moins un capteur (22) à l'intérieur du circuit incomplet (14) et approprié pour détecter ladite au moins une caractéristique électrique par l'intermédiaire du circuit fonctionnel (10) en complétant le circuit incomplet (14) ; et
au moins une liste comparative (610) stockée dans une mémoire non transitoire (610a) du dispositif de réception (30), ladite au moins une caractéristique électrique détectée étant comparée à ladite au moins une liste comparative (610) pour délivrer l'authentification, et l'authentification délivrée étant indicative d'une action unique.

2. Système selon la revendication 1, où l'interface (20) comprend une interface filaire ou une interface sans fil.

3. Système selon la revendication 1, où le circuit incomplet (14) comprend un circuit ouvert.

4. Système selon la revendication 1, où le premier circuit (12) comprend un circuit passif.

5. Système selon la revendication 1, où the liste comparative (610) comprend une base de données.

6. Système selon la revendication 1, où le premier circuit (12) comprend une pluralité d'encres fonctionnelles (12a).

7. Système selon la revendication 1, où le premier circuit (12) comprend une impression d'écran.

8. Système selon la revendication 1, où l'élément physique (40) consiste en un parmi une capsule de café (602),une cassette de diagnostic (804), un pichet de boisson et une cartouche de liquide (702, 704, 706).

9. Système selon la revendication 1, où le dispositif de réception (30) comprend un parmi une machine d'infusion et un lecteur de diagnostics (802).

10. Système selon la revendication 1, où l'authentification comprend au moins un parmi présence, identification, température, niveau, humidité et vibrations.

11. Système selon la revendication 1, où la caractéristique électrique détectée comprend au moins une parmi résistance, capacitance, inductance, performance lumineuse, fréquence filtrée, fréquence transmise et fréquence d'émission.

12. Système selon la revendication 1, où le substrat d'impression (202) est conformable, et / ou
où le substrat d'impression (202) comprend une surface extérieure de l'élément physique (40).

13. Système selon la revendication 1, comprenant en outre un adhésif (402) approprié pour coller le substrat d'impression (202) à l'élément physique (40).

14. Système selon la revendication 1, comprenant en outre une alimentation en courant sur le dispositif de réception (30), le courant alimentant le circuit fonctionnel (10) par complétion du circuit fonctionnel (10).

15. Système selon la revendication 1, où l'action unique comprend la création d'une boisson spécifique ou un réapprovisionnement.
